(19) Europäisches Patentamt
European Patent Office
Office européen des brevets

(11) **EP 4 725 586 A1**

(12) **EUROPEAN PATENT APPLICATION**

(43) Date of publication:
**15.04.2026 Bulletin 2026/16**

(21) Application number: **25202407.0**

(22) Date of filing: **16.09.2025**

(51) International Patent Classification (IPC):
**B01D 53/04** $^{(2006.01)}$

(52) Cooperative Patent Classification (CPC):
**B01D 53/0423; B01D 53/0446;** B01D 53/0462;
B01D 53/047; B01D 53/0476; B01D 2253/102;
B01D 2253/108; B01D 2257/302; B01D 2257/404;
B01D 2257/504; B01D 2257/80; B01D 2258/0283;
B01D 2259/4145; B01D 2259/4148

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.09.2024 IN 202421071993**

(71) Applicant: **Tata Consultancy Services Limited
Mumbai, Maharashtra 400 021 (IN)**

(72) Inventors:
• **BADHAN, Navneet Singh
201309 Noida, Uttar Pradesh (IN)**

• **RUNKANA, Venkataramana
411028 Pune, Maharashtra (IN)**
• **SUBRAMANIAN, Sivakumar
411057 Pune, Maharashtra (IN)**
• **SUHAIL, Mohammed
411057 Pune, Maharashtra (IN)**
• **CHAUDHARY, Ayush
201309 Noida, Uttar Pradesh (IN)**
• **RAO, Davuluri Prahlada
500049 Hyderabad, Telangana (IN)**

(74) Representative: **Goddar, Heinz J.
Boehmert & Boehmert
Anwaltspartnerschaft mbB
Pettenkoferstrasse 22
80336 München (DE)**

(54) **SPLIT BED PACKED COLUMN FOR PROCESSING GAS AND METHOD THEREOF**

(57) This disclosure relates generally to processing of gas using packed bed column, and more particularly, a split bed packed column for processing gas. In current packed bed column configurations high pressure drop in packed column leads to increased energy consumption and puts a restriction on using high feed velocities, resulting in high cycle time. This results in increased requirement of adsorbent for processing of gas which thereby increases the operational expenses. The disclosed configuration includes multiple beds inside the same column differentiated by partitions instead of a single long bed inside the column. This configuration enables decreasing the pressure drop along the length, resulting in decreased energy consumption for the same cycle time, without compromising on other process key performance indicators. The disclosed configuration is used for gas separation via adsorption, thermal energy storage applications and so on.

FIG. 1

**Description**

CROSS-REFERENCE TO RELATED APPLICATIONS AND PRIORITY

The present application claims priority from Indian provisional patent application no. 202421071993, filed on September 24, 2024. The entire contents of the aforementioned application are incorporated herein by reference.

TECHNICAL FIELD

The disclosure herein generally relates to processing a gaseous stream using packed bed column, and, more particularly, to split bed packed column for processing gas and method thereof.

BACKGROUND

A packed bed column is a type of chemical reactor or separation device commonly used in chemical engineering, petrochemical processes, and environmental engineering. It consists of a cylindrical vessel filled with packing material. The packing material is typically made of small, randomly oriented particles such as beads or structured materials such as monolith and laminate. In a packed bed column, one or more fluid phase pass through the packing material. The packing creates a large surface area and pathways for the fluid, enhancing contact between the phases and improving mass or heat transfer characteristics for the chemical reaction. The different applications of the packed bed column are absorption, adsorption, conducting reactions between phases, and thermal energy storage for applications such as industrial heat recovery and residential or commercial heating and cooling systems. In gas separation using adsorption, the molecules of the heavy component of the gaseous mixture adhere to the surface of the sorbent, thus separating the target gas from the gaseous mixture. The sorbent is then regenerated to release the target gas from its surface and prepared for the next cycle of adsorption. Adsorption has a wide range of application; it is used to produce high-purity oxygen or nitrogen from air, separate carbon dioxide from flue gas exhaust from various industries such as cement plant, power plant and automobiles, recover helium, and remove moisture from air. Packed bed column is also used as a catalytic reactor in petrochemical and chemical industries for catalytic reactions such as synthesis of ammonia, methanol and various hydrocarbons. It is also used for hydrogenation of vegetable oils or dehydrogenation of hydrocarbon. Thermal energy received from the sun can also be stored in packed containing materials such as ceramics. This thermal energy is cyclically (periodically) recovered to be used as thermal energy or converted to other forms of energy such as electricity. There are several advantages for the packed bed column: it is the simplest of all column configurations to contact a fixed solid phase with a flowing gas phase, its plug-flow nature ensures minimal back mixing of fluid molecules, it is easier to operate and maintain and the like. However, the packed bed column has a few disadvantages: it imposes very high pressure drop resulting in very high energy consumption, it allows limited feed velocities, it has decreased process productivity due to large cycle time and the like.

SUMMARY

Embodiments of the present disclosure present technological improvements as solutions to one or more of the above-mentioned technical problems recognized by the inventors in conventional systems. For example, in one embodiment, split bed packed column for processing gas is provided. The split bed packed column includes a packed bed column, one or more partitions, zero or more feed lines, zero or more product lines, and a plurality of valves. The packed bed column is split into a plurality of beds comprising packing material. The one or more partitions is used to split the packed bed column into the plurality of beds. The zero or more feed lines is connected to the plurality of beds for feeding the gaseous stream to the plurality of beds. The zero or more product lines connected to the plurality of beds for letting out processed gas from the plurality of beds. The plurality of valves is attached to the zero or more feed lines and the zero or more product lines. Each bed amongst the plurality of beds is connected to at least one feed line or one product line. Each partition amongst the one or more partitions is one of (i) a physical controllable partition, or (ii) a geometry-induced partition. The plurality of valves is used for entry and exit of the gaseous stream to the plurality of beds via the zero or more feed lines and the zero or more product lines. The plurality of valves is attached to the zero or more feed lines and the zero or more product lines facilitate independent control of each bed.
The packing material is at least one of (i) same packing material or (ii) different packing material. The packing material is at least one of (i) an active structured or unstructured material facilitating higher surface area for contact between phases for effective physio-chemical reaction, or (ii) an inert material providing support to the active material or (iii) an inert structured or unstructured material exchanging heat with the gaseous stream.
The plurality of beds operates independently in parallel when (i) the one or more partitions is closed, and (ii) the plurality of valves is opened. The plurality of beds operates in series when (i) the one or more partitions separating the plurality of beds is opened, and (ii) the plurality of valves except an entry valve of the first bed and an exit valve of the last bed in series amongst the plurality of valves are closed.

The packed bed column is split into the plurality of beds of (i) equal length or (ii) different length based on a processing method of the gaseous stream and the packing material used. The plurality of valves is used for the entry of the gaseous stream to at least one bed among plurality of beds through the zero or more feed lines and is used for the exit of the processed gas from at least one bed among the plurality of beds through the zero or more product lines. The plurality of valves is used to evacuate (i) the plurality of beds independently or (ii) at multiple points in each bed amongst the plurality of beds, and is used for one of (i) a forward depressurization or (ii) a reverse depressurization of the plurality of beds. The depressurization is used broadly here to imply applying a vacuum to evacuate the adsorbed gases.

In another embodiment, a process for processing a gaseous stream using a packed column with multiple beds is provided. The process includes, feeding the gaseous stream from a source to the packed column via a plurality of valves. And then processing, the gaseous stream by a plurality of beds comprised in the packed column to obtain a processed gas. The gaseous stream traverses through the packing material comprised in each bed of the plurality of beds. The plurality of columns with plurality of beds is connected via the zero or more feed lines and the zero or more product lines to operate in a sequential manner to accomplish a cyclic process, comprising adsorption, heating, evacuation, pressurization and cooling, for processing the gaseous stream. The plurality of beds is connected in a closed feasible geometry using the zero or more feed lines and the zero or more product lines to produce operations of a moving bed for gas separation via adsorption by suitably switching the plurality of valves and the one or more partitions. The plurality of beds in plurality of columns is used for multi-step gas separation process via adsorption using different regeneration techniques comprising pressure swing adsorption (PSA), vacuum swing adsorption (VSA), temperature swing adsorption (TSA), concentration swing adsorption (CSA) or a combination thereof. The plurality of beds is connected using the zero or more feed lines and the zero or more product lines for thermal energy storage operation comprising heating and cooling steps, allowing heat storage in the inert packing in the plurality of beds

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a schematic diagram of a split bed packed column with multiple beds according to some embodiments of the present disclosure.

FIG. 2A and FIG. 2B is a schematic diagram of a two-bed split packed column working in series and in parallel respectively according to some embodiments of the present disclosure.

FIG. 3 depicts a schematic diagram of a packed bed column employed in vacuum swing adsorption in accordance with some embodiments of the present disclosure.

FIG. 4 is a schematic diagram of the two-bed split packed column employed in vacuum swing adsorption according to some embodiments of the present disclosure.

FIG. 5 is a schematic diagram of a U-bend two-bed split packed column employed in vacuum swing adsorption process according to some embodiments of the present disclosure.

FIG. 6 is a schematic diagram of a vacuum swing adsorption using multi-port evacuation in two-bed split packed bed column according to some embodiments of the present disclosure.

FIG. 7 is a schematic diagram of a two-bed split packed bed column with provision for reverse evacuation during vacuum swing adsorption, in accordance with some embodiments of the present disclosure.

FIG. 8 is a schematic diagram of a U-bend two-bed split packed column used to alternate the feed direction during vacuum swing adsorption, in accordance with some embodiments of the present disclosure.

FIG. 9 is a schematic diagram of a simulated moving bed configuration with three two-bed split packed columns employed in temperature swing adsorption at a first time instance, in accordance with some embodiments of the present disclosure.

FIG. 10 is a schematic diagram of the simulated moving bed configuration with three two-bed split packed columns employed in temperature swing adsorption at a second time instance, in accordance with some embodiments of the present disclosure.

FIG. 11 is a schematic diagram of the simulated moving bed configuration with three two-bed split packed columns employed in temperature swing adsorption at a third time instance, in accordance with some embodiments of the present disclosure.

FIG. 12 is a schematic diagram of a simulated moving bed configuration with a six-bed split packed column employed in temperature swing adsorption at three consecutive step times, in accordance with some embodiments of the present disclosure.

FIG. 13 an exemplary flow diagram illustrating a process for processing a gaseous stream using the split bed packed column with multiple beds according to some embodiments of the present disclosure.

FIG. 14 illustrates comparison results between the energy required for heating and cooling an inert bed in a complete packed column and that required for two-bed split packed column according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

A packed bed column is a type of reactor commonly used in chemical engineering, petrochemical processes and environmental engineering. In a packed bed column, one or more fluid phases pass through the packing material, which provides a large surface area for contact between the fluid and solid phase, enhancing the heat and mass transfer characteristics of the process. The packing material could be unstructured such as beads, or structured such as monolith and laminate. Packed bed is typically used for conversion or capture of the fluid phase by physio-chemical reaction with the solid phase. Common applications of the packed bed include distillation, filtration, ion exchange, thermal energy storage, and gas separation via absorption and adsorption.

The most common method for gas separation, absorption, has several drawbacks. The liquid-gas system suffers from drawbacks such as high energy consumption, column corrosion and solvent losses due to factors such as chemical degradation and evaporation. Also, this system is difficult to operate and maintain compared to solid-gas system, adsorption. Adsorption, which has gained a lot of attention from research and industrial community alike in the recent years, employs various regeneration techniques comprising vacuum swing adsorption (VSA), pressure swing adsorption (PSA), temperature swing adsorption (TSA), concentration swing adsorption (CSA) or a combination thereof such as pressure temperature swing adsorption (PTSA). Since depressurization is involved in both pressure and vacuum swings operations, these two regeneration techniques have been used interchangeably in this work.

Adsorption can be accomplished in several column configurations which can be broadly classified into fixed bed, true moving bed, simulated moving bed and fluidized moving bed, each with its own advantages and drawbacks. The fixed bed adsorption process, in which gas passes through a stationary sorbent bed, is the simplest of all the column configurations, and hence is easy to operate and maintain. The plug-flow nature of the bed is the biggest advantage of this configuration, ensuring limited back-mixing of the gas molecules. However, fixed beds are known to impose a very high pressure drop in the column even at moderate feed velocities, resulting in very high energy consumption because of increased compression costs and hence in high operating expenses. One of the ways to overcome this drawback is to use large adsorbent particles. But larger particles have a lower surface-area-to-volume ratio than smaller particles and cause higher dispersion of the mass and heat transfer zones, leading to poor adsorption efficiency and hence lower recovery. Another alternative is to use structured sorbents such as monoliths and laminates which have been reported to have lesser pressure drop. But the different structured sorbents tested thus far have failed to considerably reduce the footprint due to low effective sorbent bulk density since they use an inert body that occupies a large fraction of the column volume. They are also typically more expensive. Hence, there is a need for an innovation that, while meeting the constraints of process KPIs, can reduce the pressure drop in the fixed bed column and increase the energy efficiency of the process by reducing the overall energy consumption.

Embodiments of the present disclosure provides a split bed packed column for reducing the energy consumption of a fixed bed packed column. The bed in a packed column is split into multiple smaller beds. The beds are separated by a controllable partition. When parallel operation is preferred, the feed to the beds is divided as per split-bed capacity, resulting in a lower feed velocity and hence lower pressure drop, which subsequently leads to lower energy consumption by blowers and vacuum pumps. In the disclosed split-bed configuration, the complete bed is split into multiple smaller beds which can be operated in series or parallel such that the fluid traverses a shorter length of the column where possible, dictated by the number of splits. Because of the split, each split-bed, when operated in parallel, processes only a part of gas stream. Therefore, the fluid from the source pipeline is distributed among the parallel beds, reducing the fluid flowrate and eventually reducing the fluid velocity for the same cycle time. This operation reduces the pressure drop inside the column and subsequently the energy consumption. The disclosed split bed packed column configuration may be used for different operations such as gas separation using adsorption, solid catalyzed chemical reactions, thermal energy storage and the like. However, the split bed packed column configuration is not limited to these processes.

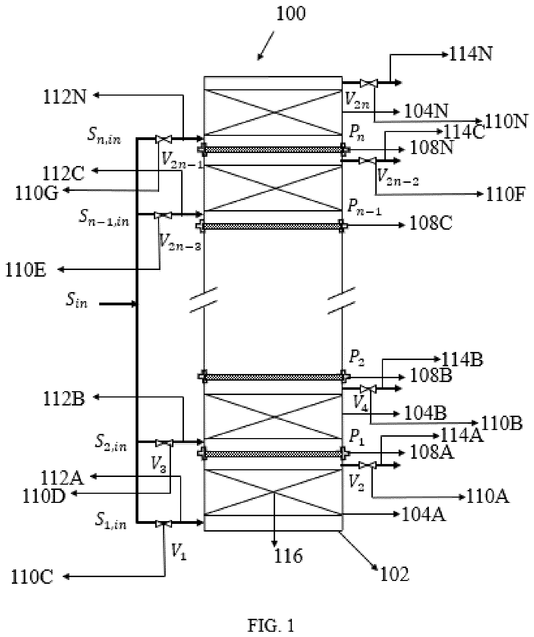

Referring now to the drawings, and more particularly to FIG. 1 through FIG. 14, where similar reference characters denote corresponding features consistently throughout the figures, there are shown preferred embodiments and these embodiments are described in the context of the following exemplary system and/or method.

Reference numerals of one or more components of the split bed packed column, as depicted in the FIG. 1 through FIG. 12 are provided in Table 1 below for ease of description.

Table 1

| S.NO | NAME OF COMPONENT | REFERENCE NUMERALS |
|------|-------------------|--------------------|
| 1 | Split bed packed column | 100 |
| 2 | Packed bed column | 102 |
| 3 | Plurality of beds | 104A-N |
| 4 | One or more partitions | 108A-N |
| 5 | Plurality of valves | 110A-N |
| 6 | Feed lines | 112A-N |
| 7 | Product lines | 114A-N |
| 8 | Packing material | 116 |

FIG. 1 is a schematic diagram of a split bed packed column (100) with multiple beds according to some embodiments of the present disclosure. The disclosed split packed bed column (100) configuration comprises a packed bed column (102), one or more partitions (108A-N), zero or more feed lines (112A-N), zero or more product lines (114A-N) and a plurality of valves (110A-N). The packed bed column (102) is split into a plurality of beds (104A-N) comprising a packing material (116). The one or more partitions (108A-N) are used to split the packed bed column (102) into the plurality of beds (104A-N). The zero or more feed lines (112A-N) are connected to the plurality of beds (104A-N) for feeding the gaseous stream to the plurality of beds (104A-N). The zero or more product lines (114A-N) are connected to the plurality of beds (104A-N) for letting out a processed gas from the plurality of beds (104A-N). The plurality of valves (110A-N) is attached to the zero or more feed lines (112A-N) and the zero or more product lines (114A-N). Also, each bed amongst the plurality of beds (104A-N) is connected to at least one feed line or one product line, while the complete column is connected to at least one feed line and at least one product line. The plurality of valves (110A-N) is used to allow entry and exit of the gaseous stream to the plurality of beds (104A-N) via the zero or more feed lines (112A-N) and the zero or more product lines (114A-N). Since the plurality of valves (110A-N) are attached to the zero or more feed lines (112A-N) and the zero or more product lines (114A-N), it facilitates independent control of each bed amongst the plurality of beds (104A-N). The zero feed line represent the multi-port column configuration, detailed later, wherein the gas inside the column is evacuated through the product lines without any feed to the split bed packed column, while the zero product line represent the column pressurization operation, which although consumes less time and energy compared to other packed bed operations, is crucial for cyclic processes. Gaseous stream enters the split bed packed column (100) through one or more feed lines (112AN), as per process requirements, with the product end closed to pressurize the column.

Referring to FIG. 1, the complete bed in the packed bed column (102) is split into n plurality of beds (104A-N), of commonly the same cross-sectional area, typically but not necessarily same length, by using one or more partitions $P_1$, $P_2$, ...., $P_n$ (108A-N). Employing plurality of valves $V_1$, $V_2$, ... ., $V_{2n-1}$, $V_{2n}$ (110AN) allows for simple entry and exit of the gaseous stream into and out of the packed bed column, thus facilitating independent control of each bed in the packed bed column. Each partitioned bed consists of an entry valve and an exit valve to control the entry and exit of the gaseous stream. The number of valves may increase depending upon the process complexity. Additional valves may be required for further processing of the beds such as during forward evacuation, reverse evacuation, and the like. Since beds with more packing material can process more feed, the feed $S_{in}$ to the column is split into n different feeds $S_{1,in}$, $S_{2,in}$, ... , $S_{n-1,in}$ and $S_{n,in}$ to each bed depending upon the length of the beds or the amount and type of the solid in each bed. In case the split is equal, the feed $S_{in}$ is uniformly split into n feeds such that the mass flowrate of feed to each split-bed is $1/n$ time the mass flowrate of the feed to the packed bed column (102) for parallel operation. When all the partitions $P_1$, $P_2$, ... ., $P_n$ are shut and all the valves $V_1$, $V_2$, ... ., $V_{2n-1}$, $V_{2n}$ are open, the plurality of beds (104A-N) operate in parallel and thereby operate independently, while when all the partitions are opened and all the valves except the entry valve $V_1$ of the first bed and the exit valve $V_{2n}$ of the last bed amongst the plurality of valves (110A-N) are closed, the plurality of beds (104A-N) operate in series, similar to a single packed bed column. Each partition amongst the one or more partitions (108A-N) can be a physically controllable partition, or a geometry-induced partition such as U-bend. The packing material can be the same material in all the plurality of beds (104A-N) or different packing material in each bed depending upon process requirements and optimization. The packing material can be an active structured or unstructured material facilitating higher surface area for contact between phases for effective physio-chemical reaction or thermal interaction. The active material may catalyze chemical reactions, reversibly bond with chemical components for effecting phenomena such as chemisorption leading to gas separation, or support phenomena such as physisorption. The packing material can also be an inert material providing support to the active material or an inert structured or unstructured material exchanging heat with the gaseous stream.

The plurality of valves (110A-N) is used for different purposes. They are used to allow for entry of the gaseous stream to at least one bed among plurality of beds (104A-N) through the feed lines (112A-N). They are also used to allow for exit of the processed gas from at least one bed through the product lines. The plurality of valves (110A-N) is used for depressurizing the plurality of beds (104A-N) independently or at multiple points in single bed. They can be used for either a forward depressurization or a reverse depressurization of the plurality of beds (104A-N).

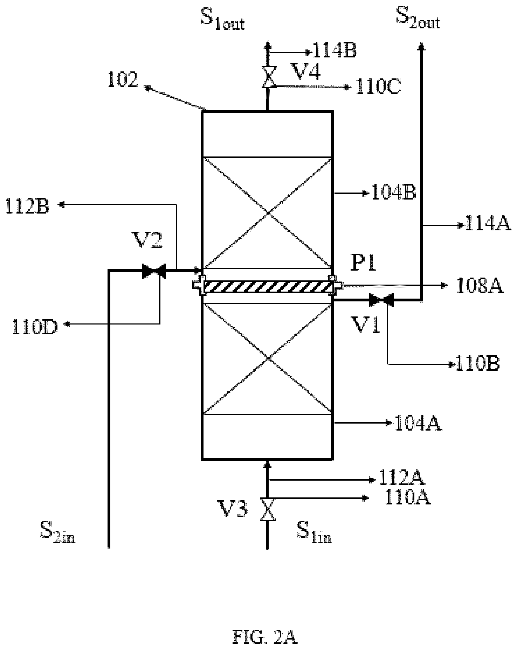

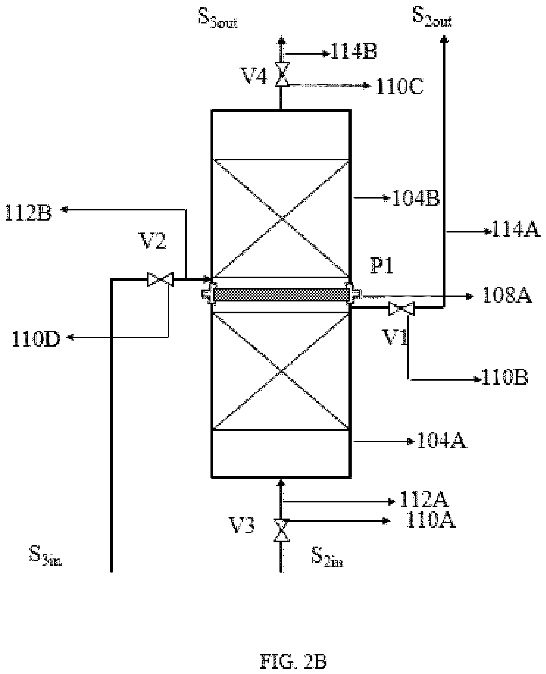

The working of beds in series and parallel configurations is further explained using FIG. 2A and FIG. 2B. FIG. 2A and FIG. 2B is a schematic diagram of a two-bed split packed column working in series and parallel configurations respectively according to some embodiments of the present disclosure. FIG. 2A and FIG. 2B depict a packed bed column (102) split into two beds of equal length. When the valves $V_1$ and $V_2$ in FIG. 2A are closed, and the partition $P_1$ is open, the bed behaves as a single column, with the feed stream $S_1$ entering the column as stream $S_{1in}$ from the bottom of the column via valve $V_3$ and leaving the column as stream $S_{1out}$ from the top of the column via valve $V_4$. This configuration can be used in an adsorption step of a gas separation process for serial processing of the feed. As shown in FIG. 2B, the complete bed is split into two parallel beds when the valves $V_1$ and $V_2$ are opened, and the partition $P_1$ is closed. In this configuration, stream $S_1$ is also divided equally into two streams $S_2$ and $S_3$ since the beds are of equal length and contain the same packing material. The stream $S_2$ enters from the bottom of the column via valve $V_3$ as stream $S_{2in}$, and leaves the column from slightly below the partition $P_1$ via valve $V_1$ as stream $S_{2out}$, while the stream $S_3$ enters the column at slightly above the partition $P_1$ via valve $V_2$ as stream $S_{3in}$, and leaves from the top of the column via $V_4$ as stream $S_{3out}$. In a similar manner, many partitions can be realized within a single column with different split ratios as necessary. The flexibility of the columns to be operated either in series mode or in parallel mode can be best utilized when some of the steps of a cyclical process are conducted using series mode and other steps use the parallel mode. For example, adsorbing a target gas from a gas mixture is probably done best in series mode as the gas travels through the entire column recovering more of the target gas, while the evacuation using a depressurization step can be executed more effectively in parallel mode by independently depressurizing the plurality of split beds.

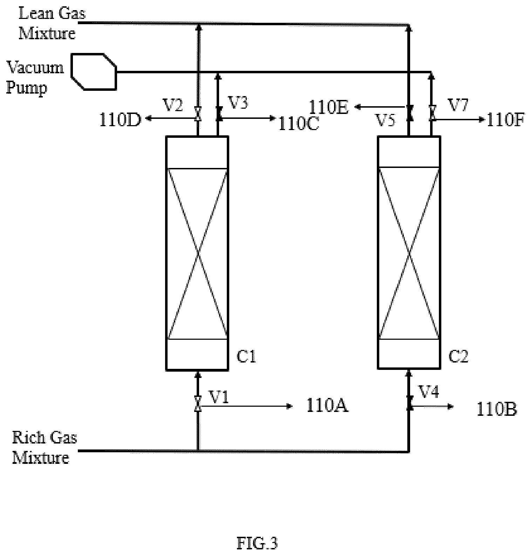

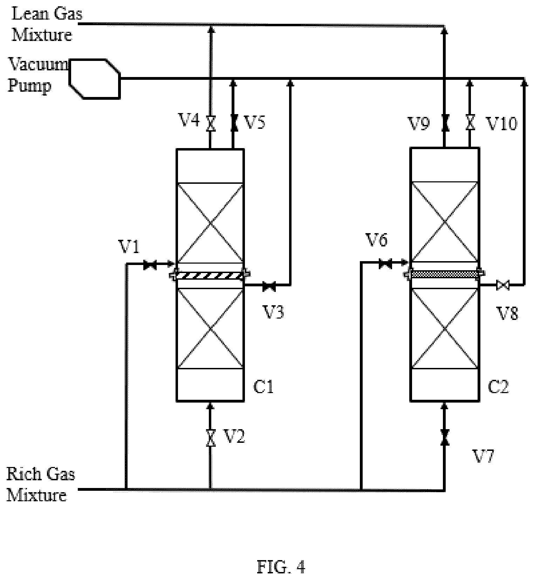

Carbon capture via vacuum swing adsorption (VSA-gas separation) is conducted to verify the efficacy of the present disclosure. In the first step, a flue gas containing 14% carbon dioxide ($CO_2$) and balance nitrogen ($N_2$) at 30°C is passed through a packed column of 2 m length for a step time of 600s. Once the adsorption step time is fixed, the gas flowrate is determined such that the mandated amount of $CO_2$ is captured at breakthrough, i.e., when $CO_2$ concentration at the column outlet is 5% of the $CO_2$ concentration coming in the adsorption feed. Next, the bed is evacuated by lowering the pressure inside the column from the product end to 0.01 bar within 574s, extracting high purity $CO_2$ from the bed. Post evacuation, column is again pressurized to 1 bar by feeding the flue gas and closing the product end for 26s. This completes the regeneration process of the bed after which bed is ready for the next cycle of adsorption. FIG. 3 depicts a schematic diagram of a packed bed column (102) employed in vacuum swing adsorption in accordance with some embodiments of the present disclosure. FIG. 4 is a schematic diagram of the two-bed split packed column employed in vacuum swing adsorption according to some embodiments of the present disclosure. During the adsorption step the partition is kept open with the feed passing through the entire bed. Post this step, evacuation of the bed is carried out during which the partition is kept closed, dividing the bed into 2 individual beds that can be evacuated individually by applying different extent of vacuum pressure, consequently optimizing recovery and specific energy consumption. The pressure drop in both the columns is dictated by the Ergun equation given in equation 1,

$$-\frac{\partial P}{\partial z} = \frac{150}{d_p^2}\left(\frac{1-\varepsilon}{\varepsilon}\right)^2 \mu_g v + \frac{1.75}{d_p}\left(\frac{1-\varepsilon}{\varepsilon}\right)\rho_g v^2 \qquad (1)$$

where, $P$ is the gas pressure, $z$ is the column length, $d_p$ is the sorbent particle diameter, $\varepsilon$ is the column void, $\mu_g$ is the gas viscosity, $\rho_g$ is the gas density, and $v$ is the interstitial gas velocity. The equation states that the pressure drop in a packed column is a second-order function of the gas velocity. So, as the gas velocity inside the packed bed decreases, the pressure drop in the column decreases, subsequently reducing electrical energy consumption of the process as given in equation 2, 3 and 4 below,

$$E_{ads} = E_{heat} = E_{cool} = \frac{1}{\eta}\varepsilon\pi r_{in}^2 \frac{\gamma}{\gamma-1}\int_{t=0}^{t=t_{step}} vP|_{z=0}\left[\left(\frac{P|_{z=0}}{P_f}\right)^{(\gamma-1)/\gamma} - 1\right]dt \quad (2)$$

$$E_{evac} = \frac{1}{\eta} \varepsilon \pi r_{in}^2 \frac{\gamma}{\gamma-1} \int_{t=0}^{t=t_{evac}} vP|_{z=1} \left[ \left( \frac{P_{atm}}{P|_{z=1}} \right)^{(\gamma-1)/\gamma} - 1 \right] dt \quad \text{if } P|_{z=L} < 1 \text{ bar, else } 0$$

$$(3)$$

$$E_{pres} = \frac{1}{\eta} \varepsilon \pi r_{in}^2 \frac{\gamma}{\gamma-1} \int_{t=0}^{t=t_{pres}} vP|_{z=0} \left[ \left( \frac{P|_{z=0}}{P_f} \right)^{(\gamma-1)/\gamma} - 1 \right] dt \quad \text{if } P|_{z=0} > P_f, \text{ else } 0$$

$$(4)$$

The energy formulation mentioned above is derived from thermodynamic perspective, and hence presents the required energy due to the pressure change in the column. This energy is directly proportional to the amount of gas supplied or evacuated and does not consider the energy consumed by the equipment in idle state. Hence, the actual electrical energy consumed by the appliances is likely to be higher than predicted by the above formulation. The electrical energy consumed by the blower during adsorption and pressurization, and by vacuum pump during evacuation is a function of pressure, velocity and step time. Since all these parameter values are at a lower state when parallel processing is adopted in the split bed configuration, there is considerable saving in operating expenses because of less pumping and evacuation power requirement.

The complete bed PSA process consumes total 3.72 MJ electrical energy and has a specific electrical consumption of 0.95 MJ/kg $CO_2$, while the two-bed split packed column configuration, operating at the same conditions with an evacuation pressure of 0.01 bar, consumes 5.59 MJ electrical energy and has a specific electrical consumption of 0.98 MJ/kg $CO_2$ as given in Table 2 and Table 3 below respectively. Table 2 provides the results for the complete bed configuration, while Table 3 provides the results for two-bed split packed column configuration.

Table 2

| Parameter | Value |
| --- | --- |
| Total Electrical Energy (MJ) | 3.73 |
| Specific Electrical energy (MJ/kg-CO2) | 0.95 |
| Recovery (%) | 21.68 |
| Productivity (kg CO2/kg- ads s) | 0.023 |

Table 3

| Parameter | Value |
| --- | --- |
| Total Electrical Energy (MJ) | 5.59 |
| Specific Electrical energy (MJ/kg-CO2) | 0.98 |
| Recovery (%) | 31.51 |
| Productivity (kg CO2/kg- ads s) | 0.033 |

While the total energy is higher for the split bed case, specific electrical energy increased only slightly, but there is a significant increase in the recovery and productivity (by almost 50%) of the process for the same cycle time. Also, since smaller beds can be evacuated more quickly and efficiently than the complete beds, it is possible to reduce the total and specific electrical energy without compromising on the recovery and productivity of the process by reducing the step time for the evacuation step, thus reducing the idle time of blowers and vacuum pumps. Hence it is possible to obtain better recovery and productivity for the same cycle time, or better specific energy and productivity for a reduced cycle time with the split bed configuration compared to the complete bed configuration.

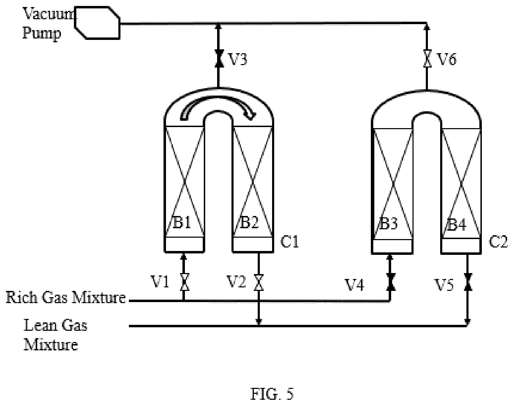

Another split bed packed column configuration to accomplish the two-bed split configuration is to connect the two split beds using a U-bend tube as shown in FIG. 5. FIG. 5 is a schematic diagram of a U-bend two-bed split packed column for vacuum swing adsorption process according to some embodiments of the present disclosure. In this configuration, the gaseous stream enters split-bed B1 via valve $V_1$ and navigates through the U-bend tube with a closed outlet valve $V_3$ to enter the split-bed B2 from the top, thus traversing the two beds in series during adsorption. For the evacuation step, valve $V_6$ is opened to allow for simultaneous depressurization of the two beds. The U-bend two-split bed configuration requires fewer valves to operate, reducing the operating as well as capital cost of the process because of lesser column complexity. The capital cost is further reduced as the partitions and the associated controls are eliminated in this configuration.

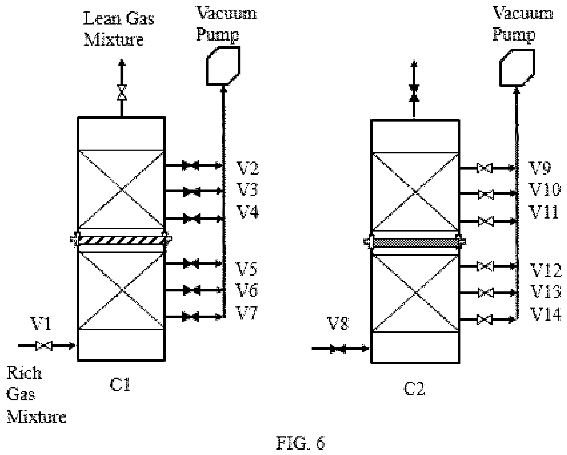

Another split bed packed column configuration to reduce the energy consumption of the adsorption process is by depressurising the column through multiple strategically placed ports in the column as shown in FIG. 6. FIG. 6 is a schematic diagram of a multi-port evacuation packed bed column (102) according to some embodiments of the present disclosure. Evacuation using multiple ports helps in more efficient and quicker evacuation of the beds as the gas flow rate achieved are higher than that achieved in single evacuation port configuration. The gaseous stream inside the column must traverse a smaller distance to be evacuated as multiple ports are placed across the length of the column than that traversed in a single port setup. This configuration, shown with but not limited to 4 evacuation ports as shown in the FIG. 6, considerably reduces the power requirement of the vacuum pump as the corresponding load is reduced. The productivity of the process also increases as cycle time reduces due to faster evacuation, enabling the same amount of gas to be processed within a shorter time interval. Since multiport evacuation facilitates more effective evacuation of the gas, it also increases the overall working capacity of the process as more adsorption sites are available for the target gas to be adsorbed, reducing the operating costs of the system and improving process efficiency. However, the system and operational complexity increases since more product lines and valves are required to control evacuation through multiple ports, adding to the capital cost of the system. But this additional rise can often be offset by the productivity increase and savings achieved in operational expenses.

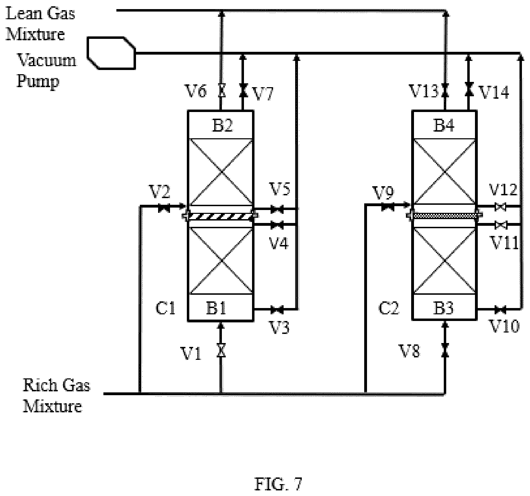

At breakthrough, there exists a decreasing concentration profile of the adsorbed target gas on the sorbent within the column, with higher concentration near the feed end and negligible concentration near the product end. Hence, because of this concentration gradient, it is important to evacuate the more saturated split-bed from the feed end (bed inlet) and evacuate the less saturated split-bed from the product end (bed outlet). This independent regeneration of the split-beds can be accomplished by suitable arrangement and operation of valves as shown in FIG. 7. FIG. 7 is a schematic diagram of the two-bed split packed bed column with provision for reverse evacuation during vacuum swing adsorption, in accordance with some embodiments of the present disclosure. Referring to FIG. 7, in this process, since adsorption feed enters from $V_1$ and exits via $V_6$, bed B1 is more saturated than bed B2. Hence, during evacuation, bed B3 is evacuated via $V_{11}$, while bed B4 is evacuated via $V_{12}$.

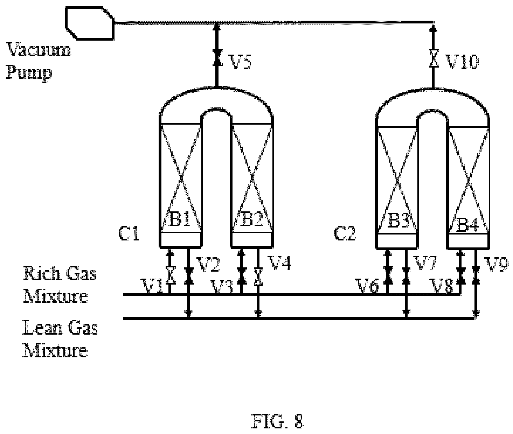

Because of the solid concentration gradient mentioned above, the portion of the column that lies near the product end is underutilized. Hence, to ensure efficient utilization of the split-beds, the adsorption feed direction to the packed bed can be changed for alternate cycles as shown in FIG. 8. FIG. 8 is a schematic diagram of a U-bend two-bed split packed column used to alternate the feed direction during vacuum swing adsorption, in accordance with some embodiments of the present disclosure. Referring to FIG. 8, in the first cycle, adsorption feed enters via $V_1$ and exits via $V_4$, traversing from the split-bed B1 to split-bed B2 through the U-bend column. After regeneration, in the next cycle, the adsorption feed enters via $V_3$ and exits via $V_2$, traversing from the less saturated split-bed B2 to split-bed B1. Since the target gas concentration on the solid sorbent decreases in the direction of the gas flow, the solid loading towards the exit is lower. Therefore, this bed after the evacuation is leaner as it has lower target gas loading than the one through which the gas feed has entered in the previous cycle and has larger capacity to adsorb the target gas. The adsorption feed direction changes again for the next cycle, and the switching continues. Moreover, since the gaseous stream becomes leaner in the processed gas composition as the mixture traverses the column, a suitable combination of different sorbents, depending on their working capacities for the given operating parameters, can be packed together in the different split beds in the column to optimize the process KPIs. After adsorption, each split-bed with different sorbent material can be regenerated independently as per its requirements. Moreover, the bed can also be sequentially packed with suitable sorbent(s) to remove impurities such as NOx, SOx or moisture, as per the process requirements, before processing the gaseous stream such as that for separating $CO_2$ from a flue gas using zeolite adsorbent. Since zeolite is hydrophilic, its $CO_2$ capacity decreases drastically in the presence of water vapour in the flue gas. In this case, the split beds can be used to first remove moisture from the flue gas using suitable sorbent such as silica, and the flue gas can then be processed for carbon removal using zeolite. The split bed configuration can also be used to process flue gas for carbon removal by PSA using first zeolite followed by activated carbon for efficient gas processing

The split-bed configuration for gas separation via adsorption is suitable for different types of regeneration techniques such as vacuum swing adsorption (VSA), pressure swing adsorption (PSA), temperature swing adsorption (TSA), concentration swing adsorption (CSA) or combinations thereof such as PTSA, VTSA and VPSA. Moreover, each split bed can be independently regenerated as per the process requirement to optimize the process KPIs.

Splitting the packed column into higher number of beds can further reduce the specific electrical consumption and increase the recovery and productivity of the process, but the reduction in operating expenses owing to the column splitting might be offset by the capital and maintenance cost incurred to set-up such a configuration as the process instrumentation required for controlling and operating more beds can become difficult compared to a lower split configuration. One need to consider the trade-offs carefully before deciding the number of splits in the column for a particular application.

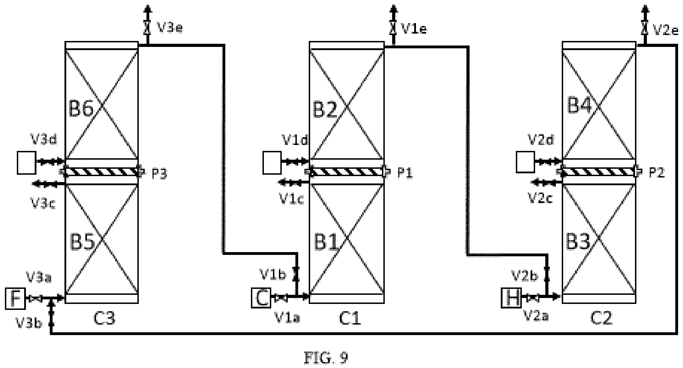

The split-bed configuration can also be used to simulate a moving bed process by suitable switching of ports and partitions. In a true moving bed gas separation process, a saturated bed processes a rich gaseous stream, while a fresh bed encounters a lean gaseous stream during adsorption as if both solid and gas streams move in the counter current direction. For heat exchange, bed at high temperature encounters a high temperature fluid and bed at low temperature encounters a low temperature fluid during heating, and vice-versa during cooling step. FIG. 9 is a schematic diagram of a simulated moving bed configuration with three two-bed split packed columns employed in temperature swing adsorption at a first time instance, in accordance with some embodiments of the present disclosure. The FIG. 9 is schematic of a gas separation process via temperature swing adsorption involving adsorption, direct heating and direct cooling steps for a three columns two-bed split configuration. The columns C1, C2 and C3 may be arranged in circular arrangement to facilitate easier physical connection among the beds located in different columns. In the first time instance, the third column C3 containing the beds B5 and B6 is in adsorption stage, the first column C1 containing the beds B1 and B2 is in cooling step, while the second column C2 containing the beds B3 and B4 is in heating step. The partitions $P_1$, $P_2$ and $P_3$ are opened to allow sequential operation in each column. In this instance, the fresh bed B6 receives a lean gaseous stream which has already been processed by bed B5. Similarly, beds B2 and B4 receive a higher temperature cooling fluid and lower temperature hot fluid respectively, which have already been processed by beds B1 and B3 respectively.

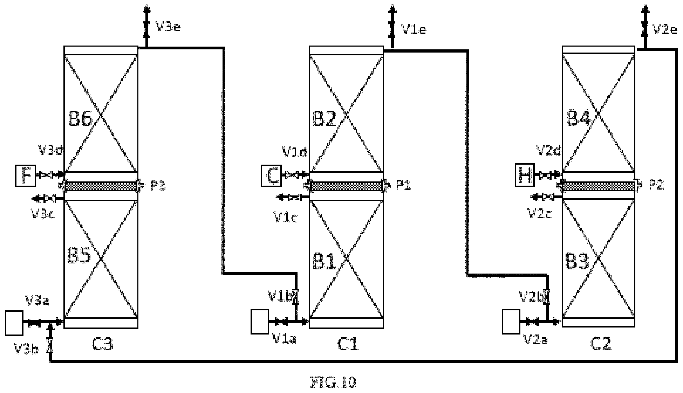

In the second time instance the partition in each bed is closed and valves position is changed suitably, thus splitting each column, as shown in FIG. 10. FIG. 10 is a schematic diagram of the simulated moving bed with three two-bed split packed columns employed in temperature swing adsorption at a second time instance, in accordance with some embodiments of the present disclosure. In this time instance, previously saturated bed B6 processes the rich gaseous stream, which is also passed through bed B 1, now fully regenerated, as lean gaseous stream. Meanwhile, beds B2 and B4 receive a lower temperature cooling fluid and higher temperature heating fluid.

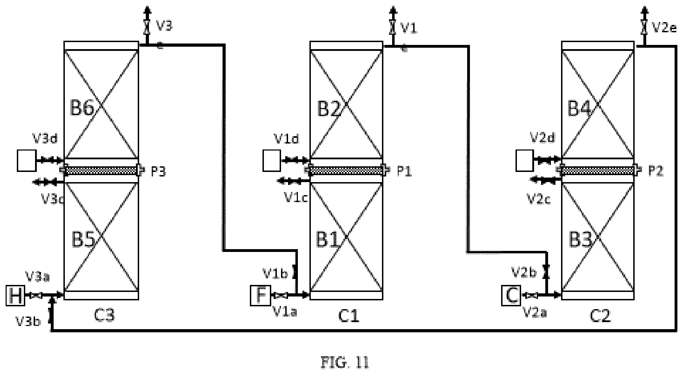

In the third time instance, column C1 processes the rich gaseous stream, while column C2 and C3 proceed to cooling and heating steps respectively, with the partition open to allow for sequential passage of the gaseous stream, as shown in FIG. 11. FIG. 11 is a schematic diagram of the simulated moving bed with three two-bed split packed columns employed in temperature swing adsorption at a third time instance, in accordance with some embodiments of the present disclosure. Thus, the sequence of appropriate feed port switching and partition shutting for each column allows simulating a true moving bed operation for 3-step temperature swing adsorption with a three column two-bed split configuration. Table 4 shows the operating stage of each bed in the simulating moving bed operation, where H represents heating, C represents cooling, and A represents adsorption stage. The complete cycle repeats after the sixth time instance since at a time, two beds are in the same stage for the three-step temperature swing operation. Hence, the operating stage of each bed at the seventh time instance will be the same as that at the first time instance. Table 5 and 6 shows the position of each valve and partition for each time instance, where O represents open, and C represents closed. A clear pattern is observed for the position of the valves and partitions as a function of time.

Table 4

| Bed | T1 | T2 | T3 | T4 | T5 | T6 |
|-----|----|----|----|----|----|----|
| B1 | C | A | A | H | H | C |
| B2 | C | C | A | A | H | H |
| B3 | H | C | C | A | A | H |
| B4 | H | H | C | C | A | A |
| B5 | A | H | H | C | C | A |
| B6 | A | A | H | H | C | C |

Table 5

| t | $V_{1a}$ | $V_{1b}$ | $V_{1c}$ | $V_{1d}$ | $V_{1e}$ | $V_{2a}$ | $V_{2b}$ | $V_{2c}$ | $V_{2d}$ | $V_{2e}$ |
|----|----|----|----|----|----|----|----|----|----|----|
| T1 | O | C | C | C | O | O | C | C | C | O |
| T2 | C | O | O | O | C | C | O | O | O | C |
| T3 | O | C | C | C | O | O | C | C | C | O |
| T4 | C | O | O | O | C | C | O | O | O | C |
| T5 | O | C | C | C | O | O | C | C | C | O |
| T6 | C | O | O | O | C | C | O | O | O | C |
| T7 | O | C | C | C | O | O | C | C | C | O |

Table 6

| t | $V_{3a}$ | $V_{3b}$ | $V_{3c}$ | $V_{3d}$ | $V_{3e}$ | $P_1$ | $P_2$ | $P_3$ |
|---|---|---|---|---|---|---|---|---|
| T1 | O | C | C | C | O | O | O | O |
| T2 | C | O | O | O | C | C | C | C |
| T3 | O | C | C | C | O | O | O | O |
| T4 | C | O | O | O | C | C | C | C |
| T5 | O | C | C | C | O | O | C | C |
| T6 | C | O | O | O | C | C | C | C |
| T7 | O | C | C | C | O | O | C | C |

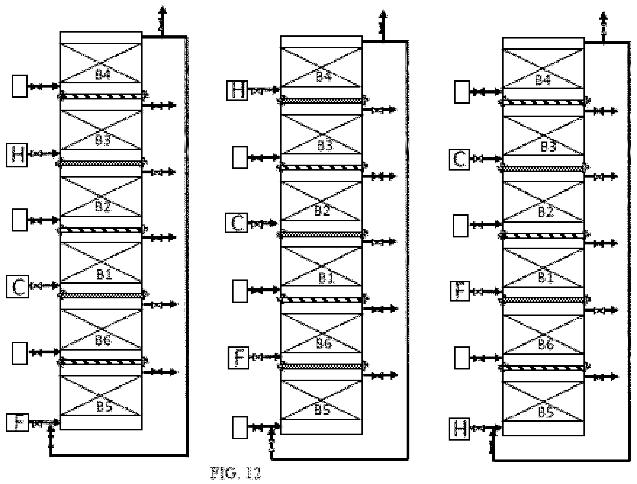

Referring to FIG. 9, FIG. 10 and FIG. 11, 'F' signifies flue gas (the gaseous stream) being fed to the column which is in adsorption stage 'A' as mentioned in Table 5, 'H' in the figures signifies heating fluid being fed to a column which is in heating stage 'H' as mentioned in Table 5. Similarly, 'C' in the figures signifies cooling fluid being fed to a column which is in cooling stage 'C' as mentioned in Table 5. Hence, symbols (F, C, and H) in FIG.9, FIG.10, and FIG.11 represents the feed to the columns, while the symbols in the Table 5 represent the process stage of the columns. A split bed packed column with higher split ratios can also be employed to simulate a true moving bed. For instance, a single column with 6-bed split can also be employed to simulate true moving bed TSA comprising adsorption, heating and cooling steps. FIG. 12 is a schematic diagram of a simulated moving bed with single six-bed split packed column employed in temperature swing adsorption, in accordance with some embodiments of the present disclosure. Appropriate port-switching can simulate counter-current movement between the fixed bed and the fluid, thus simulating a true moving bed operation.

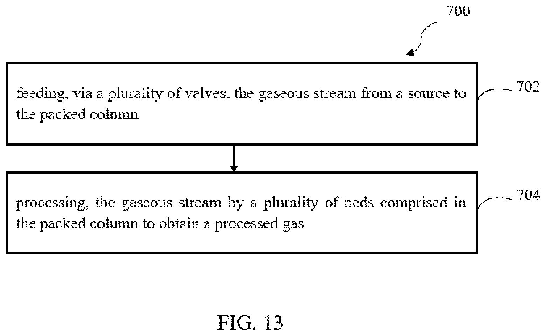

FIG. 13 is an exemplary flow diagram 700 illustrating a process for processing the gaseous stream using the split bed packed column (100) with multiple beds according to some embodiments of the present disclosure. FIG. 13 is explained in conjunction with the components explained for FIG. 1. At step 702 of the process 700, the gaseous stream is fed from a source to the packed column. The source depends on the type of processing of the gaseous stream. For example, for separating gaseous mixtures such as CO2-N2, CH4-N2 and the like, where each gaseous mixture is fed from different sources. For thermal energy storage, inert gas can be circulating in the packed column. At step 704 of the process 700, the gaseous stream is processed by at least one bed amongst the plurality of beds (104A-N) comprised in the packed column to obtain a processed gas. The gaseous stream traverses through the packing material comprised in the at least one bed of the plurality of beds (104A-N). The plurality of beds (104A-N) in plurality of columns is used for multi-step cyclical gas separation process via adsorption using different regeneration techniques comprising pressure swing adsorption (PSA), vacuum swing adsorption (VSA), temperature swing adsorption (TSA), concentration swing adsorption (CSA) or a combination thereof. The plurality of beds (104A-N) may be connected using the zero or more feed lines (112A-N) and the zero or more product lines for thermal energy storage operation comprising heating and cooling steps, allowing heat storage in the inert packing in the plurality of beds (104A-N).

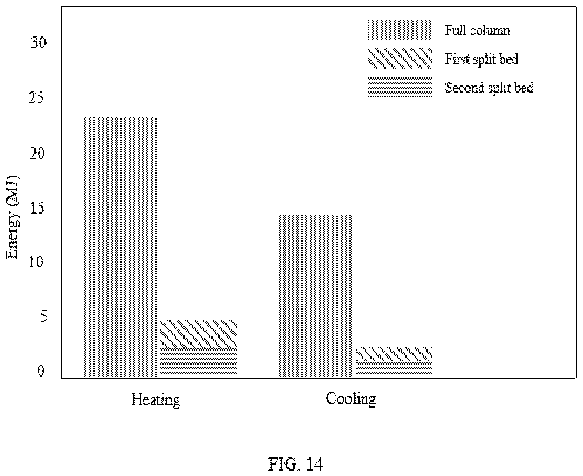

SIMULATION RESULTS: Computer simulations were performed to verify the efficacy of the present disclosure for thermal energy storage applications in which a circulating fluid is used to heat and cool the packed beds which act as heat storage and sink. Hot air at 300°C containing 78% N2 and 22% O2 is fed to a 2m tall inert packed bed initially at 30°C to heat the bed, while cold air at 30°C with same composition was fed to cool the bed at 300°C. It is observed that the 2-bed split configuration consumed about four times less energy than the full column configuration, as shown in FIG. 14. FIG. 14 illustrates comparison results between the energy required for heating and cooling an inert bed in a complete packed column and that required for two-bed split packed column according to some embodiments of the present disclosure. The column could be split into more number of beds, resulting in higher energy savings proportional to the square of the gas velocity, but as mentioned before, the savings could be off-set by the increase in capital and operating cost owing to more complex control system and additional capital cost.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure provide split bed packed column (100) with multiple beds inside the packed column which are separated by partitions. In current available packed bed column (102) configuration, high pressure drop in packed columns leads to increased energy consumption and puts a restriction on using high feed velocities, resulting in high cycle time. This results in increased requirement of adsorbent for the processing of gas, eventually decreasing the productivity of the process and increasing the capital and operating expenses. Thus, it is crucial to increase the efficiency of the bed while respecting other constraints for different operations such as gas separation using adsorption, thermal energy storage, etc. involving packed beds. The disclosed configuration of split bed packed column (100) decreases the pressure drop along the length when operated in parallel configuration, resulting in decreased energy consumption for the same cycle time, without compromising on other process key performance indicators. Moreover, the cycle time can be decreased with the same energy consumption, resulting in increased productivity of the process, hence more gas can be processed in the given period.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

It is intended that the disclosure and examples be considered as exemplary only, with a true scope of disclosed embodiments being indicated by the following claims.

## Claims

1. A split bed packed column (100) with multiple beds for processing a gaseous stream comprising:

   a packed bed column (102), wherein the packed bed column is split into a plurality of beds (104A-N) comprising a packing material (116);
   one or more partitions (108A-N) used to split the packed bed column into the plurality of beds;
   zero or more feed lines (112A-N) connected to the plurality of beds for feeding the gaseous stream to the plurality of beds;
   zero or more product lines (114A-N) connected to the plurality of beds for letting out processed gas from the plurality of beds; and
   a plurality of valves (110A-N) attached to the zero or more feed lines and the zero or more product lines, wherein each bed amongst the plurality of beds is connected to at least one feed line or one product line,

   wherein each partition amongst the one or more partitions is one of (i) a physical controllable partition, or (ii) a geometry-induced partition,
   wherein the plurality of valves is used for entry and exit of the gaseous stream to the plurality of beds via the zero or more feed lines and the zero or more product lines, and
   wherein the plurality of valves attached to the zero or more feed lines and the zero or more product lines facilitate independent control of each bed.

2. The packed column as claimed in claim 1, wherein

   the packing material is at least one of (i) same packing material or (ii) different packing material, and
   the packing material is at least one of (i) an active structured or unstructured material facilitating higher surface area for contact between phases for effective physio-chemical reaction, or (ii) an inert material providing support to the active material or (iii) an inert structured or unstructured material exchanging heat with the gaseous stream.

3. The packed column as claimed in claim 1, wherein

   the plurality of beds operates independently in parallel when (i) the one or more partitions is closed, and (ii) the plurality of valves is opened, and
   the plurality of beds operates in series when (i) the one or more partitions separating the plurality of beds is opened, and (ii) the plurality of valves except an entry valve of the first bed and an exit valve of the last bed in series amongst the plurality of valves are closed.

4. The packed column as claimed in claim 1, wherein the packed bed column is split into the plurality of beds of (i) equal length or (ii) different length based on a processing method of the gaseous stream and the packing material used.

5. The packed column as claimed in claim 1, wherein at least one valve amongst the plurality of valves

is used for the entry of the gaseous stream to at least one bed among plurality of beds through the zero or more feed lines,
is used for the exit of the processed gas from at least one bed among the plurality of beds through the zero or more product lines,
is used to evacuate (i) the plurality of beds independently or (ii) at multiple points in each bed amongst the plurality of beds, and
is used for one of (i) a forward depressurization or (ii) a reverse depressurization of the plurality of beds.

6. A process for processing a gaseous stream using a packed column with multiple beds, comprising,

feeding, via a plurality of valves, the gaseous stream from a source to the packed column;
processing, the gaseous stream by a plurality of beds comprised in the packed column to obtain a processed gas, wherein the gaseous stream traverses through the packing material comprised in each bed of the plurality of beds;
wherein the packed column comprising:

a packed bed column, wherein the packed bed column is split into the plurality of beds comprising a packing material,
one or more partitions used to split the packed bed column into the plurality of beds,
zero or more feed lines connected to the plurality of beds for feeding the gas to the plurality of beds,
zero or more product lines connected to the plurality of beds for letting out processed gas from the plurality of beds, and
a plurality of valves attached to the zero or more feed lines and the zero or more product lines, wherein each bed amongst the plurality of beds is connected to at least one feed line or product line,

wherein each partition amongst the one or more partitions is one of (i) a physical controllable partition, or (ii) a geometry-induced partition,
wherein the plurality of valves is used for entry and exit of the gaseous stream to the plurality of beds via the zero or more feed lines and the zero or more product lines,
and
wherein the plurality of valves attached to the zero or more feed lines and the zero or more product lines facilitates independent control of each bed.

7. The process as claimed in claim 6, wherein

the packing material is at least one of (i) same packing material or (ii) different packing material, and
the packing material is at least one of (i) an active structured or unstructured material facilitating higher surface area for contacted between phases for effective physio-chemical reaction, or (ii) an inert material providing support to the active material or (iii) the inert structured or unstructured material exchanging heat with the gas.

8. The process as claimed in claim 6, wherein

the plurality of beds operates independently in parallel when (i) the one or more partitions is closed, and (ii) the plurality of valves is opened, and
the plurality of beds operates in series when (i) the one or more partitions separating the plurality of beds is opened, and (ii) the plurality of valves except an entry valve of the first bed and an exit valve of the last bed in series amongst the plurality of valves are closed.

9. The process as claimed in claim 6, wherein the packed bed column is split into the plurality of beds of (i) equal length or (ii) different length based on a processing method of the gaseous stream and the packing material used.

10. The process as claimed in claim 6, wherein at least one valve amongst the plurality of valves

is used for the entry of the gaseous stream to at least one bed among plurality of beds through the zero or more feed lines,
is used for the exit of the processed gas from at least one bed among the plurality of beds through the zero or more product lines,
is used to evacuate (i) the plurality of beds independently or (ii) at multiple points in each bed amongst the plurality of beds, and
is used for one of (i) a forward depressurization or (ii) a reverse depressurization of the plurality of beds.

11. The process as claimed in claim 6, wherein the plurality of columns with plurality of beds is connected via the zero or more feed lines and the zero or more product lines to operate in a sequential manner to accomplish a cyclic process, comprising adsorption, heating, evacuation, pressurization and cooling, for processing the gaseous stream.

12. The process as claimed in claim 6, wherein the plurality of beds is connected in a closed feasible geometry using the zero or more feed lines and the zero or more product lines to produce operations of a moving bed for gas separation via adsorption by suitably switching the plurality of valves and the one or more partitions.

13. The process as claimed in claim 6, wherein the plurality of beds in plurality of columns is used for multi-step gas separation process via adsorption using different regeneration techniques comprising pressure swing adsorption (PSA), vacuum swing adsorption (VSA), temperature swing adsorption (TSA), concentration swing adsorption (CSA) or a combination thereof.

14. The process as claimed in claim 6, wherein the plurality of beds is connected using the zero or more feed lines and the zero or more product lines for thermal energy storage operation comprising heating and cooling steps, allowing heat storage in the inert packing in the plurality of beds.

FIG. 1

EP 4 725 586 A1

FIG. 2A

FIG. 2B

Lean Gas
Mixture

Vacuum
Pump

V2    V3        110E        V7
110D ←      →   110C   V5 ←     →110F

C1                          C2

V1      → 110A        V4      110B

Rich Gas
Mixture

FIG.3

FIG. 4

FIG. 5

FIG. 6

FIG. 7

FIG. 8

FIG. 9

FIG.10

FIG. 11

FIG. 12

700

feeding, via a plurality of valves, the gaseous stream from a source to
the packed column

702

processing, the gaseous stream by a plurality of beds comprised in
the packed column to obtain a processed gas

704

FIG. 13

FIG. 14

Europäisches
Patentamt

European
Patent Office

Office européen
des brevets

# EUROPEAN SEARCH REPORT

**Application Number**

EP 25 20 2407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H07 194917 A (DAIDO HOXAN INC) 1 August 1995 (1995-08-01) | 1-7,9-13 | INV. B01D53/04 |
| Y | * paragraphs [0011], [0013], [0014]; figures 14,,11 * | 8,14 | |
| Y | US 2021/370223 A1 (STUCKERT NICHOLAS [US]) 2 December 2021 (2021-12-02) | 14 | |
| A | * figure 3 * | 2,7 | |
| Y | US 4 516 985 A (WINTER KARL [DE]) 14 May 1985 (1985-05-14) | 8 | |
| A | * figures 1,2 * | 3 | |
| A | FR 3 103 394 A3 (AIR LIQUIDE [FR]) 28 May 2021 (2021-05-28) * figures 1,2 * | 1,2,4,6, 7,9 | |

**TECHNICAL FIELDS SEARCHED (IPC)**

B01D

The present search report has been drawn up for all claims

| Place of search | Date of completion of the search | Examiner |
|---|---|---|
| Munich | 20 February 2026 | de Biasio, Arnaldo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 725 586 A1**

## ANNEX TO THE EUROPEAN SEARCH REPORT
## ON EUROPEAN PATENT APPLICATION NO.

EP 25 20 2407

20-02-2026

| Patent document cited in search report | | Publication date | Patent family member(s) | | Publication date |
|---|---|---|---|---|---|
| JP H07194917 | A | 01-08-1995 | JP | 2574641 B2 | 22-01-1997 |
| | | | JP | H07194917 A | 01-08-1995 |
| US 2021370223 | A1 | 02-12-2021 | AU | 2021281480 A1 | 02-02-2023 |
| | | | CA | 3177666 A1 | 02-12-2021 |
| | | | EP | 4157486 A1 | 05-04-2023 |
| | | | US | 2021370223 A1 | 02-12-2021 |
| | | | US | 2024042371 A1 | 08-02-2024 |
| | | | WO | 2021242717 A1 | 02-12-2021 |
| US 4516985 | A | 14-05-1985 | CA | 1199591 A | 21-01-1986 |
| | | | FR | 2532186 A1 | 02-03-1984 |
| | | | GB | 2126122 A | 21-03-1984 |
| | | | US | 4516985 A | 14-05-1985 |
| FR 3103394 | A3 | 28-05-2021 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421071993